# EUROPEAN PATENT APPLICATION

(11) **EP 4 458 790 A1**
(43) Date of publication of application: **06.11.2024**
(21) Application number: 23171067.4
(22) Date of filing: 02.05.2023
(51) Int. Cl.: C05C 1/02, C05C 3/00, C05C 5/02, C05D 3/02, C05D 9/02, C05G 5/30, C05G 5/12

(54) **AMMONIUM NITRATE-BASED COMPOSITION AND METHOD OF MANUFACTURE THEREOF**

(71) Applicant: Yara International ASA, 0277 Oslo (NO)
(72) Inventor: Odu, Samuel, 4533 ET Terneuzen (NL); Teirlynck, Davy, 9180 Moerbeke-Waas (BE); Winne, Erika, 9000 Gent (BE)
(74) Representative: AWA Sweden AB

(57) **Abstract**

The present disclosure provides a solid, homogeneous particle comprising from 50 to 85 weight% of ammonium nitrate, ammonium sulfate, sodium nitrate, aluminum sulfate, and a component selected from the group consisting of dolomite, gypsum, lime, and limestone. The present disclosure also provides a solid particle comprising a solid, homogeneous core particle according to the present disclosure coated with a coating composition at least partially covering the solid, homogeneous core particle and a method for the manufacture of a solid, homogeneous particle according to the present disclosure.

## Description

### Field of the disclosure

The present disclosure is related to the field of fertilizers, in particular a solid, homogeneous particle comprising ammonium nitrate.

### Background information

Ammonium nitrate is an important inorganic material widely used today. It is used in different industries, and its two main applications are as a fertilizer and as an explosive.

As a fertilizer, it provides nitrogen to the soil in two forms: ammonium ions and nitrate ions. Nitrate ions are easily absorbed by crops and are considered a quick action fertilizer source. Ammonium ions may also be absorbed as such by crops but at a much lower rate than nitrate. Ammonium ions are also slowly oxidized to nitrate ions by agents, such as bacteria, enzymes, and fungi, contained in soils or crop roots, and are then readily absorbed by crops. Ammonium ions are considered a slow-acting nitrogen source.

Solid, particulate compositions comprising ammonium nitrate often have a low hardness or crushing strength, meaning that the particles easily break during production, storage, handling, and transport. Manufacturing methods have been developed to remedy this issue. For example, GB2045735B (Compagnie Neerlendaise de l'azote, 1983) discloses the manufacture of ammonium nitrate particles containing magnesium nitrate.

Despite the progress accomplished in the field, there is a need to develop novel fertilizer compositions that perform better than the current state of the art.

### Summary of the disclosure

A new combination of additives to be added in the production of ammonium nitrate-based particles was found to improve the properties of the particles, in particular their particle strength and their tolerance to humid conditions.

In a first aspect, the present disclosure provides a solid, homogeneous particle comprising from 50 to 85 weight% of ammonium nitrate, ammonium sulfate, sodium nitrate, aluminum sulfate, and a component selected from the group consisting of dolomite, gypsum, lime, and limestone, based on the total weight of the solid, homogeneous particle.

In another aspect, the present disclosure provides a solid particle comprising a solid, homogeneous core particle according to the present disclosure coated with a coating composition at least partially covering the solid, homogeneous core particle, in particular wherein the coating composition comprises a wax, an alkyl phosphate ester, and an amine, in particular wherein the wax is a petroleum wax or a paraffin wax.

In another aspect, the present disclosure provides a method for the manufacture of a solid, homogeneous particle according to the present disclosure, comprising the steps of:
a) providing a melt comprising ammonium nitrate;
b) adding ammonium sulfate to the melt provided in step a);
c) adding sodium nitrate to the melt provided in step a);
d) adding aluminum sulfate to the melt provided in step a);
e) adding a component selected from the group consisting of dolomite, gypsum, lime, and limestone to the melt provided in step a);
f) mixing the melt comprising ammonium nitrate, ammonium sulfate, sodium nitrate, aluminum sulfate, and a component selected from the group consisting of dolomite, gypsum, lime, and limestone, thereby obtaining a homogeneous melt;
g) processing the homogeneous melt obtained in step f) to form solid, homogeneous particles.

### Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the composition.

In a first aspect, the present disclosure provides a solid, homogeneous particle comprising from 50 to 85 weight% of ammonium nitrate, ammonium sulfate, sodium nitrate, aluminum sulfate, and a component selected from the group consisting of dolomite, gypsum, lime, and limestone, based on the total weight of the solid, homogeneous particle.

Ammonium nitrate is a very good source of nitrogen for crops since it provides nitrogen in two forms: a fast-acting form, nitrate ions, and a slow-acting source, ammonium ions. This allows the farmers to provide sufficient nitrogen for a long period with only one application. However, composition with over 90 weight% of ammonium have a high explosion risk, so it is often preferred to decrease the nitrogen content of the particle to improve its safety profile. An ammonium nitrate content of from 50 to 85 weight% is seen as a good compromise between maintaining a high nitrogen content and low safety risks.

Solid, particulate compositions comprising ammonium nitrate have been sold for decades for use as a fertilizer. It is well known that ammonium nitrate-based solid, particulate compositions have some issues, such as low particle hardness. This means that the particles do not tolerate handling operations very well. Particles will break and be crushed, generating smaller particles and dust, and in worst cases become pulverized. This impacts the final application in farming fields, whether performed by mechanical means such as a spreader or even manual applications. Thus, the impact is both on expected application amount, and which type of mode of application is actually feasible with the material at hand. Additives have been researched, examined, and developed to improve the properties of ammonium nitrate-based solid, particulate compositions. For example, GB1515898 (Australian Fertilizers Ltd, 1978) discloses the addition of aluminium sulphate to an ammonium nitrate melt to produce a free-flowing material. GB2045735B (Compagnie Neerlandaise de I'azote, 1983) discloses the addition of magnesium nitrate to an ammonium nitrate melt to decrease the porosity of solid ammonium nitrate particles.

It is known to add additives in ammonium nitrate-based particles to decrease the safety risks and improve the physical properties of the particles.

It has now been found that a combination of ammonium sulfate, aluminum sulfate, sodium nitrate and an inorganic filler selected from the group consisting of dolomite, gypsum, lime, and limestone, provided very good physical properties to the ammonium nitrate-based particles, in particular related to particle strength and retention of particle strength after moisture uptake/absorption.

In some embodiments, the solid, homogeneous particle comprises from 0.1 to 10 weight% of ammonium sulfate, in particular from 0.5 to 5.0 weight%, more in particular from 1.0 to 4.0 weight% of ammonium sulfate, based on the total weight of the solid, homogeneous particle.

Ammonium sulfate is an inorganic salt that may be used on its own as a fertilizer since it contains two nutrient sources: ammonium to provide nitrogen, and sulfate to provide sulfur, which is a secondary nutrient required by most crops.

In some embodiments, the solid, homogeneous particle comprises from 0.1 to 10 weight% of sodium nitrate, in particular from 0.5 to 5.0 weight%, more in particular from 0.5 to 3.0 weight% of sodium nitrate, based on the total weight of the solid, homogeneous particle.

Sodium nitrate is another source of nitrogen for crops. However, some crops do not grow well in the presence of high sodium content.

In some embodiments, the solid, homogeneous particle comprises from 0.1 to 10 weight% of aluminum sulfate, in particular from 0.5 to 5.0 weight%, more in particular from 1.0 to 3.0 weight% of aluminum sulfate, based on the total weight of the solid, homogeneous particle.

Aluminum is not a nutrient required by crops, but it has been shown that the addition of aluminum sulfate to ammonium nitrate melt improves the physical properties of the solid particles made from such melts.

In some embodiments, the solid, homogeneous particle from 10 to 25 weight%, or from 15 to 25 weight% of the component selected from the group consisting of dolomite, gypsum, lime, and limestone, based on the total weight of the solid, homogeneous particle.

Inorganic filler, such as dolomite, gypsum, lime, and limestone, are known to be used in ammonium nitrate-based composition. They are cheap, available in large amounts, and reduce efficiently the explosion risks of ammonium nitrate-based compositions.

In some embodiments, the solid, homogeneous particle comprises from 10 to 25 weight%, or from 15 to 25 weight% of dolomite. Dolomite is a solid containing mostly calcium magnesium carbonate. Calcium and magnesium are secondary nutrients required by crops, and the carbonate ions can be used to raise the pH of soils. Most crops grow better in a soil with a pH around 7, but some regions suffer from soil acidification, so it is an advantage to add a basic component in the solid, homogeneous particle.

In some embodiments, the solid, homogeneous particle comprises from 70 to 80 weight% of ammonium nitrate, based on the total weight of the solid, homogeneous particle.

In some embodiments, the solid, homogeneous particle comprises from 70 to 80 weight% of ammonium nitrate, from 1.0 to 4.0 weight% of ammonium sulfate, from 0.5 to 3.0 weight% of sodium nitrate, from 1.0 to 3.0 weight% of aluminum sulfate, and from 15 to 25 weight% of a component selected from the group consisting of dolomite, gypsum, lime, and limestone, based on the total weight of the solid, homogeneous particle.

In another aspect, the present disclosure provides a solid particle comprising a solid, homogeneous particle according to the present disclosure coated with a coating composition at least partially covering the solid, homogeneous core particle, in particular wherein the coating composition comprises a wax, an alkyl phosphate ester, and an amine, in particular wherein the wax is a petroleum wax or a paraffin wax. Coating compositions are often used on fertilizer particles to improve one or more properties of the particles. It was found that a coating composition comprising a wax, an alkyl phosphate ester, and an amine, reduced the water absorption rate of the particles coated with such coating composition.

In some embodiments, the coating composition comprises from 75 to 90 weight% of a wax, such as a paraffin wax, from 5.0 to 10 weight% of an amine, in particular from 5.0 to 10 weight% of a component selected from the group consisting of hexaldecylamine, octadecyl amine, and mixtures thereof, and from 5.0 to 10 weight% of an alkyl phosphate ester.

In some embodiments, the solid particle comprises from 500 to 2000 ppm of the coating composition. In some embodiments, the solid particle comprises from 0.05 to 0.2 weight% of the coating composition. It was found in some examples that an amount from 0.05 to 0.2 weight% of the coating composition provided an increase of the particle's performances without making the particle too sticky, or without lowering the nutrient content of the particle too much.

In another aspect, the present disclosure provides a method for the manufacture of a solid, homogeneous particle according to the present disclosure, comprising the steps of:
a) providing a melt comprising ammonium nitrate;
b) adding ammonium sulfate to the melt provided in step a);
c) adding sodium nitrate to the melt provided in step a);
d) adding aluminum sulfate to the melt provided in step a);
e) adding a component selected from the group consisting of dolomite, gypsum, lime, and limestone to the melt provided in step a);
f) mixing the melt comprising ammonium nitrate, ammonium sulfate, sodium nitrate, aluminum sulfate, and a component selected from the group consisting of dolomite, gypsum, lime, and limestone, thereby obtaining a homogeneous melt;
g) processing the homogeneous melt obtained in step f) to form solid, homogeneous particles.

A method suitable for preparing the particles disclosed above starts with a melt comprising ammonium nitrate.

The melt provided in step a) may comprise from 50 to 100 weight%, from 60 to 100 weight%, from 70 to 100 weight%, from 80 to 100 weight%, or from 90 to 100 weight% of ammonium nitrate.

The melt provided in step a) may comprise from 50 to 99 weight%, from 60 to 99 weight%, from 70 to 99 weight%, from 80 to 99 weight%, or from 90 to 99 weight% of ammonium nitrate.

The melt provided in step a) may comprise from 50 to 95 weight%, from 60 to 95 weight%, from 70 to 95 weight%, from 80 to 95 weight%, or from 90 to 95 weight% of ammonium nitrate.

A melt comprising ammonium nitrate may be obtained by different methods known in the field, such as melting particles containing ammonium nitrate, or mixing ammonia, gas or liquid, with nitric acid.

A melt comprising ammonium nitrate may contain water, in particular from 0.1 to 20 weight%, from 0.1 to 10 weight%, from 1.0 to 10 weight%, from 2.0 to 10 weight%, or from 0.1 to 5 weight% of water. The presence of water lowers the viscosity of the melt and facilitates its transport in the plant and the mixing of additives.

The present method requires the addition of at least four solid additives: ammonium sulfate, aluminum sulfate, sodium nitrate, and a component selected from the group consisting of dolomite, gypsum, lime, and limestone. These four additives may be added simultaneously or one after the other in no particular order.

The resulting mixture may be mixed between each addition, or only after all the additives have been added. The mixture is mixed until the melt is homogeneous, which means that the solid additives are dispersed in the melt, but the melt still comprises solid particles. The solid additives may not dissolve completely in the melt. The resulting homogeneous melt may also be called a slurry.

The duration of the mixing step may depend on different factors, such as the size of the mixer, the mixing means comprised in the mixer, the melt mass or volume, or the amounts of solid additives added to the melt.

Once homogeneous, the melt is directed to the processing step, which transforms a melt or slurry into solid, homogeneous particles. Different techniques are known in the field to transform a melt or slurry comprising ammonium nitrate into solid, homogeneous particles. Suitable techniques comprise granulation, such as pan granulation, drum granulation, or fluidized bed granulation, prilling, spherodizer, pugmill, and pastillator. In particular, fluidized bed granulation has shown to be able to produce high quality, ammonium nitrate-based, solid particles.

The method may comprise a step of adjusting the water content of the homogeneous melt comprising all the required additives before the processing step to achieve the desired water content. The adjusting step may consist in increasing or decreasing the water content of the homogeneous melt obtained in step f). Each processing technique may require a different water content to perform under optimum conditions. Additional water may be added to the melt before the addition of the additives to lower the viscosity of the melt and facilitate the mixing of the additives with the melt.

In some embodiments, the water content of the melt obtained in step f) is adjusted to from 1.0 to 4.0 weight% before being processed in step g). For example, processing an ammonium nitrate-based melt in a fluidized bed granulator requires a water content of from 1.0 to 4.0 weight%, or from 1.5 to 3.0 weight%.

In some embodiments, ammonium sulfate is added to the melt in step b) such that the solid, homogeneous particles produced by the method comprise from 0.1 to 10 weight% of ammonium sulfate, in particular from 0.5 to 5.0 weight%, more in particular from 1.0 to 4.0 weight% of ammonium sulfate, based on the total weight of the solid, homogeneous particles.

In some embodiments, sodium nitrate is added to the melt in step c) such that the solid, homogeneous particles produced by the method comprise from 0.1 to 10 weight% of sodium nitrate, in particular from 0.5 to 5.0 weight%, more in particular from 0.5 to 3.0 weight% of sodium nitrate, based on the total weight of the solid, homogeneous particles.

In some embodiments, aluminum sulfate is added to the melt in step d) such that the solid, homogeneous particles produced by the method comprise from 0.1 to 10 weight% of aluminum sulfate, in particular from 0.5 to 5.0 weight%, more in particular from 1.0 to 3.0 weight% of aluminum sulfate, based on the total weight of the solid, homogeneous particles.

In some embodiments, a component selected from the group consisting of dolomite, gypsum, lime, and limestone, is added to the melt in step e) such that the solid, homogeneous particles produced by the method comprise from 10 to 25 weight%, or from 15 to 25 weight% of the component selected from the group consisting of dolomite, gypsum, lime, and limestone, based on the total weight of the solid, homogeneous particles.

In another aspect, the present disclosure provides the use of the solid, homogeneous particle according to the present disclosure, or the coated solid particle described above as a fertilizer.

### Experimental data:

A melt comprising ammonium nitrate, dolomite and water was prepared by heating ammonium nitrate prills. Different batches of particles were prepared by adding different combinations of additives:
- 0.8 weight% of aluminum sulfate - Comparative Example 1;
- 1.5 weight% of ammonium sulfate and 1.0 weight% of sodium nitrate - Comparative Example 2;
- 3.0 weight% of ammonium sulfate, 1.5 weight% of aluminum sulfate, and 1.0 weight% of sodium nitrate - Example 1;
- 1.5 weight% of ammonium sulfate, 1.5 weight% of aluminum sulfate, and 1.0 weight% of sodium nitrate - Example 2.
- 1.5 weight% of ammonium sulfate, 0.8 weight% of aluminum sulfate, and 1.0 weight% of sodium nitrate - Example 3.

A series of tests was performed on the particles: particle strength, particle strength after moistening the particles (8 hours at 20°C and 80% RH), dust emissions, hygroscopicity, caking index after moistening the particles (8 hours at 20°C and 80% RH), swelling test. The results are normalized, and the sum of all tests are added to obtain a score reflecting the overall performance of the particles: the higher the score is, the better the particles are.

| | **Test score** |
|---|---|
| Comparative Example 1 | 68 |
| Comparative Example 2 | 63 |
| Example 1 | 85 |
| Example 2 | 75 |
| Example 3 | 75 |

It can be seen that the combination of ammonium sulfate, sodium nitrate, and aluminum sulfate, has a synergistic effect compared to the samples containing aluminum sulfate alone, and ammonium sulfate with sodium nitrate.

## Claims

1. A solid, homogeneous particle comprising from 50 to 85 weight% of ammonium nitrate, ammonium sulfate, sodium nitrate, aluminum sulfate, and a component selected from the group consisting of dolomite, gypsum, lime, and limestone, based on the total weight of the solid, homogeneous particle.

2. The solid, homogeneous particle according to claim 1, comprising from 0.1 to 10 weight% of ammonium sulfate, in particular from 0.5 to 5.0 weight%, more in particular from 1.0 to 4.0 weight% of ammonium sulfate, based on the total weight of the solid, homogeneous particle.

3. The solid, homogeneous particle according to claim 1 or 2, comprising from 0.1 to 10 weight% of sodium nitrate, in particular from 0.5 to 5.0 weight%, more in particular from 0.5 to 3.0 weight% of sodium nitrate, based on the total weight of the solid, homogeneous particle.

4. The solid, homogeneous particle according to any one of claims 1 to 3, comprising from 0.1 to 10 weight% of aluminum sulfate, in particular from 0.5 to 5.0 weight%, more in particular from 1.0 to 3.0 weight% of aluminum sulfate, based on the total weight of the solid, homogeneous particle.

5. The solid, homogeneous particle according to any one of claims 1 to 4, comprising from 10 to 25 weight% of the component selected from the group consisting of dolomite, gypsum, lime, and limestone, based on the total weight of the solid, homogeneous particle.

6. The solid, homogeneous particle according to any one of claims 1 to 5, comprising from 70 to 80 weight% of ammonium nitrate, based on the total weight of the solid, homogeneous particle.

7. The solid, homogeneous particle according to any one of claims 1 to 6, wherein the solid, homogeneous particle comprises from 70 to 80 weight% of ammonium nitrate, from 1.0 to 4.0 weight% of ammonium sulfate, from 0.5 to 3.0 weight% of sodium nitrate, from 1.0 to 3.0 weight% of aluminum sulfate, and from 15 to 25 weight% of a component selected from the group consisting of dolomite, gypsum, lime, and limestone, based on the total weight of the solid, homogeneous particle.

8. A solid particle comprising a solid, homogeneous particle according to any one of claims 1 to 7, wherein the solid, homogeneous particle is coated with a coating composition at least partially covering the solid, homogeneous particle.

9. The solid particle according to claim 8, wherein the coating composition comprises a wax, an alkyl phosphate ester, and an amine, in particular wherein the wax is a petroleum wax or a paraffin wax.

10. A method for the manufacture of a solid, homogeneous particle according to any one of claims 1 to 7, the method comprising the steps of:
a) providing a melt comprising ammonium nitrate;
b) adding ammonium sulfate to the melt provided in step a);
c) adding sodium nitrate to the melt provided in step a);
d) adding aluminum sulfate to the melt provided in step a);
e) adding a component selected from the group consisting of dolomite, gypsum, lime, and limestone to the melt provided in step a);
f) mixing the melt comprising ammonium nitrate, ammonium sulfate, sodium nitrate, aluminum sulfate, and a component selected from the group consisting of dolomite, gypsum, lime, and limestone, thereby obtaining a homogeneous melt;
g) processing the homogeneous melt obtained in step f) to form solid, homogeneous particles.

11. The method according to claim 10, further comprising the step of evaporating water from the homogenous melt obtained in step f), such that the homogeneous melt processed in step g) has a water content of from 1.0 to 4.0 weight%.

12. Use of the solid, homogeneous particle according to any one of claims 1 to 7, or the solid particle according to claim 8 or 9 as a fertilizer.
